# EUROPÄISCHE PATENTSCHRIFT

(11) **EP 2 128 793 B1**
(45) Veröffentlichungstag und Bekanntmachung des Hinweises auf die Patenterteilung: **17.10.2012**
(21) Anmeldenummer: 08009752.0
(22) Anmeldetag: 28.05.2008
(51) Int. Cl.: G06K 9/00, B42C 1/12

(54) **Verfahren und Vorrichtung zum Überprüfen von Druckerzeugnissen, Computerprogramm und Computerprogrammprodukt**
Method and device for inspecting print products, computer program and computer program product
Procédé et dispositif destinés à vérifier des produits d'impression, programme informatique et produit de programme informatique

(43) Veröffentlichungstag der Anmeldung: 02.12.2009
(73) Patentinhaber: Pepperl + Fuchs GmbH, 68307 Mannheim (DE)
(72) Erfinder: Rauscher, Benedikt, 61440 - Oberursel (DE); Caspari, Thomas, 64347 - Griesheim (DE); Steinmann, Hendrik, 67547 - Worms (DE); Boenick, Rainer, 16845 - Altgarz (DE)
(74) Vertreter: Schiffer, Axel Martin

(56) Entgegenhaltungen:
- EP-A- 1 156 445
- EP-A- 1 715 441
- US-A- 4 441 205
- US-A1- 2003 081 813
- US-B1- 6 264 105

## Beschreibung

Die Erfindung betrifft ein Verfahren und eine Vorrichtung zum Überprüfen von Druckerzeugnissen, insbesondere von gleichartigen bedruckten Papierbögen, die von einer Transporteinrichtung transportiert werden.

Außerdem betrifft die Erfindung ein Computerprogramm und ein Computerprogrammprodukt.

Ein Überprüfen von Druckerzeugnissen ist für Buchbindemaschinen aus den Druckschriften EP 1 586 462 A2 und EP 1 715 441 A2 bekannt. Bei der Überprüfung von Druckerzeugnissen für Buchbindemaschinen kommt es darauf an, die richtige Reihenfolge der Druckerzeugnisse zu überprüfen und zu erkennen. Dies erfolgt in bekannter Weise mit digitalen Kameras und mit dem Erkennen von aufeinander folgenden Erkennungszeichen auf den unterschiedlich bedruckten Papierbögen. Als Erkennungszeichen können dabei auch die von Papierbogen zu Papierbogen unterschiedlichen Druckbilder dienen, die einer Buchbindemaschine in einer korrekten vorgegebenen Reihenfolge zuzuführen sind. Die entsprechenden Einlernprogramme und Überprüfungsprogramme erfordern hierfür einen hohen maschinellen und programmatischen Aufwand verbunden. Zusätzlich erfordern sie ein schnelles Zugreifen auf umfangreiche Speicherinformationen, um die Wiedererkennung der richtigen Reihenfolge im Maschinentakt und ein Vermeiden von Reihenfolgefehlern zu ermöglichen, und entsprechend die Buchbindemaschinen zu stoppen, falls Reihenfolgefehler auftreten.

Bei vielen Druckerzeugnissen ist es jedoch nicht erforderlich, eine korrekte Reihenfolge mit einer Vielzahl von unterschiedlichen, eventuell aufeinander folgenden Kennzeichnungen zu ermitteln. Es ist ausreichend, die Gleichartigkeit der Druckerzeugnisse zu überprüfen und vor einem Zuführen zu einer Buchbindemaschine, Katalogklebemaschine oder zu einer Zeitschriftenheftmaschine die Gleichartigkeit und eine Lagekonformität der Druckerzeugnisse sicherzustellen. In einer schnellen Drucknachverarbeitung von Druckerzeugnissen oder in der Verpackungsindustrie kommt es zu Problemen, wenn die zu verarbeitenden gleichartigen Druckerzeugnisse nicht korrekt einer entsprechenden Maschine zugeführt werden. Die Folgen sind, dass Buchbindemaschinen leere Seiten binden, Zusammentragungsmaschinen verdreht die Seiten zusammenlegen, Falzmaschinen falsche Papierbögen falten und schneiden oder Verpackungsmaschinen beispielsweise in Medikamentenschachteln verkehrte Packzettel einordnen.

Eine im Stand der Technik bekannte Lösung besteht darin, auf den Druckerzeugnissen an den Rändern Codes zur Identifizierung aufzudrucken. Unter Umständen können die Codes nach dem Binden oder Falten abgeschnitten werden. In der Maschine wird dann ein Lesegerät integriert und die eingelesenen Codes mit vorgegebenen Werten verglichen. Ein Nachteil dieses Verfahrens sind die vorher auf jeden Bogen oder jedes Druckerzeugnis aufzudruckenden Codes, die einen zusätzlichen Aufwand bedeuten und auch nicht in allen Fällen aufbringbar sind.

In EP 1 156 445 A2 ist ein Verfahren zur Erkennung von Objekten beschrieben. Dazu werden mit einer Kamera digitale Darstellungen der Objekte erzeugt. Zunächst wird in einer Darstellung ein Vergleichsausschnitt ausgewählt, der mit einem entsprechenden Vergleichsausschnitt einer anderen Darstellung verglichen werden soll. Die Lage eines Vergleichsausschnitts ist vorerst unbekannt und wird in einem gesonderten Schritt ermittelt. Dazu wird innerhalb eines Vergleichsausschnitts ein kleinerer, charakteristischer Suchausschnitt festgelegt und die Lage des Vergleichsausschnitts in Bezug auf den Suchausschnitt abgespeichert. Darauf wird in einer zu untersuchenden Darstellung nach dem festgelegten Suchausschnitt gesucht und so die Position des Vergleichsausschnitts in der zu untersuchenden Darstellung ermittelt. Schließlich werden die Vergleichausschnitte der verschiedenen Darstellungen miteinander verglichen, indem die Anzahl übereinstimmender Pixel bestimmt wird. Dabei gilt ein Objekt als erkennt, wenn die Anzahl übereinstimmender Pixel einen vorgegebenen Schwellenwert übertrifft.

US 6,264,105 B1 betrifft ein Lesegerät für Barcodes. Das Lesegerät nimmt ein Bild des Barcodes auf und verarbeitet das Bild, um daraus die im Barcode gespeicherten Informationen zu decodieren. Zu der Verarbeitung gehören die Schritte, dass aus den aufgenommenen Pixeln durch Interpolation Zwischenpixel erzeugt werden und dass die aufgenommenen Graustufenwerte der Pixel zu binären Schwarz-/Weiß-Werten reduziert werden.

Als eine **Aufgabe** der Erfindung kann erachtet werden, bei möglichst kleinem Aufwand an Überprüfungszeit sowohl in der Einlernphase als auch in der Überprüfungsphase die Gleichartigkeit und Lagekonformität von Druckerzeugnissen zu überprüfen. Ferner kann als Aufgabe der Erfindung angesehen werden, die für die Einlernphase vorzusehende Anzahl von gleichartigen Druckerzeugnissen zu minimieren. Schließlich ist eine Aufgabe der Erfindung, eine für das Verfahren geeignete Vorrichtung zu schaffen. Außerdem soll ein geeignetes Computerprogramm angegeben werden.

Diese Aufgabe wird mit dem Gegenstand der unabhängigen Ansprüche gelöst. Vorteilhafte Weiterbildungen der Erfindung ergeben sich aus den abhängigen Ansprüchen.

Erfingdungsgemäß werden ein Verfahren und eine Vorrichtung zum Überprüfen von gleichartigen Druckerzeugnissen, insbesondere von gleichartigen bedruckten Papierbögen, die von einer Transporteinrichtung transportiert werden, geschaffen. Dazu werden bei einer Einlernphase an mehreren Stellen des Druckerzeugnisses mit einer Digitaikamera Testbilder aufgenommen. Anschließend wird innerhalb jedes Testbildes ein Auswertebereich definiert, welcher kleiner oder gleich der Größe des Testbildes ist. Jeder Auswertebereich wird im Hinblick auf seine charakteristischen Informationen ausgewertet. Als ein sogenanntes Referenzbild wird dann das Testbild ausgewählt, bei dem der Auswertebereich die kennzeichnungskräftigsten charakteristischen Informationen aufweist.

Zum Überprüfen von nachfolgenden gleichartigen Druckerzeugnissen wird von jedem Druckerzeugnis ein Überprüfungsbild erstellt. Die Position dieses Überprüfungsbildes korrespondiert hierbei mit der Position des Referenzbildes auf den Druckerzeugnissen. Die Gleichartigkeit und Lagekonformität des nachfolgenden Druckerzeugnisses zu dem Druckerzeugnis, zu dem das Referenzbild erzeugt wurde, wird durch Vergleich zumindest eines Teilbereiches des Überprüfungsbildes mit dem Auswertebereich des Referenzbildes anhand von Bilddaten durchgeführt.

Diese Überprüfung wird mit einer erfindungsgemäßen Vorrichtung durchgeführt, die eine Digitalkamera zum Aufnehmen von Testbildern des Druckerzeugnisses, eine Beleuchtungseinrichtung zum Beleuchten des Druckerzeugnisses, einen Eingang zum Zuführen eines Positionssignals und eine Steuer- und Auswerteeinrichtung zum Ansteuern der Digitalkamera und der Beleuchtungseinrichtung und zum Auswerten von Bilddaten der Digitalkamera aufweist.

Ein Grundgedanke des erfindungsgemäßen Verfahrens ist es, dass auf dem Druckerzeugnis ein Bereich ermittelt wird, der sich als besonders gut zur Qualitätskontrolle der nachfolgenden Druckerzeugnisse eignet. Unter Qualitätskontrolle im Sinne der Erfindung kann beispielsweise die Gleichartigkeit und Lagekonformität der nachfolgenden Druckerzeugnisse zu den Druckerzeugnissen angesehen werden, die während der Einlernphase analysiert wurden. Dieser ermittelte Bereich eignet sich zur Qualitätskontrolle, insbesondere durch Vergleich mit nachfolgenden Druckerzeugnissen, wenn er mit einem relativ geringen Bearbeitungsaufwand eine relativ gute Aussage über die Qualität des untersuchten Druckerzeugnisses ermöglicht. Anders ausgedrückt wird in der Einlernphase ein Referenzbild mit einem Auswertebereicht ausgewählt, basierend auf dem es möglich ist, innerhalb von Bruchteilen von Sekunden ein Richtig/Falsch-Signal als Ergebnis des Überprüfungsverfahrens zu ermitteln. Bei einem Falschsignal kann dann an einem Ausgang der Steuer- und Auswerteeinrichtung ein Fehlersignal ausgegeben werden.

Um das Referenzbild zu ermitteln, welches den am besten geeignetsten Auswertebereich aufweist, werden zu dem Auswertebereich jedes Testbildes charakteristische Informationen ermittelt. Anschließend wird das Testbild als Referenzbild bzw. dessen Auswertebereich ausgewählt, das die kennzeichungskräftigsten charakteristischen Informationen beinhaltet. Sowohl zum Ermitteln von charakteristische Informationen wie auch zur Bewertung der Informationen sind verschiedenen Methoden geeignet. Wichtig ist hierbei, dass die Ermittlung der Informationen schnell und mit möglichst geringer Rechenleistung durchzuführen ist, da das erfindungsgemäße Verfahren und die erfindungsgemäße Vorrichtung auch in echtzeitkritischen Umgebungen eingesetzt werden.

Eine Möglichkeit zur Ermittlung und Bewertung der charakteristischen Informationen ist es, den Auswertebereich jedes Testbildes in eine Anzahl von Teilbereichen zu unterteilen und jeweils die Teilbereiche auf ihre charakteristischen Informationen hin zu analysieren. Dies bietet unter anderem den Vorteil, dass es zur Ermittlung von charakteristischen Informationen je nach der Wahl der charakteristischen Informationen günstiger ist, diese für mehrere Teilbereiche anstelle für den gesamten Auswertebereich zu ermitteln. Eine Möglichkeit für charakteristische Informationen ist beispielsweise die Kantenanzahl. Hierunter kann die Anzahl der Wechsel zwischen Hell und Dunkel verstanden werden. Ebenfalls ist es möglich, Daten zu dem Kontrastwert, dessen Verteilung, dem Histogramm der Helligkeit, dem durchschnittlichen Grauwert oder dem Mittelwert der Grauwerte zu ermitteln.

Vorzugsweise wird der Auswertebereich in n² quadratische Teilbereiche, mit n als ganzer positiver Zahl, z. B. in 16 oder 25 Teilquadrate aufgeteilt. Bei einem quadratischen Auswertebereich ist dies eine einfache und dennoch ausreichende Unterteilung.

Grundsätzlich ist es bevorzugt, wenn während der Einlernphase möglichst wenig Verfahrensschritte durchgeführt werden, da dies die Einlernphase verlängern würde. Ist beispielsweise für die spätere Überprüfung der nachfolgenden Druckerzeugnisse vorteilhaft, wenn möglichst viele Kanten in einem Teilbereich vorhanden sind, so kann es bei der Ermittlung der charakteristischen Informationen zu jedem Teilbereich bereits ausreichen, wenn nur die Kantenanzahl in jedem Teilbereich ermittelt wird. Nur für den Fall, dass zum Beispiel festgestellt wird, dass zu wenige Kanten in einem Teilbereich vorhanden sind, kann eine andere charakteristische Information wie der Graustufenmittelwert berechnet werden.

In einer vorteilhaften Ausführungsform des erfindungsgemäßen Verfahrens ist es beispielsweise vorgesehen, dass zur Überprüfung nachfolgender Druckerzeugnisse jeder Teilbereich des Auswertebereiches des Referenzbildes mit den jeweils korrespondierenden Teilbereichen des Überprüfungsbildes verglichen wird. Dieser Vergleich kann beispielsweise durch eine Korrelationsberechnung der beiden Teilbereiche erfolgen. Da jedoch die Korrelationsberechnung nur bei einer ausreichenden Kantenanzahl ein ausreichend zuverlässiges Ergebnis liefert, ist es bevorzugt, dass ein Schwellwert für die Kantenanzahl definiert ist. Hat ein Teilbereich des Auswertebereiches mehr Kanten als durch den Schwellwert definiert, so eignet sich der Teilbereich, d. h. seine Bildinformation, für einen Vergleich basierend auf Korrelation. Ist die Kantenanzahl geringer, so kann eine zusätzliche Vergleichsvariable ermittelt werden, die zusätzlich oder auch anstelle des auf Korrelation basierenden Vergleichs verglichen werden kann. Hierfür bietet sich beispielsweise der Graustufenmittelwert an. Für einen Auswertebereich ergibt sich damit eine unterschiedliche Anzahl an Teilbereichen, die zu einem auf Korrelation basierenden Vergleich dienen können, und eine Anzahl von Teilquadraten, die lediglich für einen Graustufenvergleich geeignet erscheinen.

So ist es vorteilhaft, wenn als Referenzbild das Testbild bzw. dessen Auswertebereich bestimmt wird, welches am meisten Teilbereiche aufweist, die eine Kantenanzahl über einen definierten Schwellwert aufweisen. Anders gesagt wird das Testbild gewählt, welches am meisten Teilbereiche hat, die zu einem Vergleich mittels Korrelation mit nachfolgenden Teilbereichen geeignet sind.

In einer vorteilhaften Ausführungsform des erfindungsgemäßen Verfahrens wird im Auswertebereich entweder jedes Testbildes oder nur des Referenzbildes ein Referenzmuster ermittelt. Hierzu kann in dem Auswertebereich eine Vielzahl von Testmustern definiert werden, die jeweils auf ihre Eignung als Referenzmuster überprüft werden. Diese Testmuster können sich auch überlappen. Mit anderen Worten wird bei der Suche nach einem geeigneten Referenzmuster eine Schablone über den Auswertebereich gelegt, die nur ein Testmuster freilässt. Diese Schablone wird über den gesamten Auswertebericht geschoben, so dass viele verschiede Testmuster erzeugt werden, die dann jeweils bewertet werden. Anschließend wird ein am besten geeignetes Testmuster als Referenzmuster ausgewählt.

Grundsätzlich kann das Referenzmuster mit beliebigen Bewertungsverfahren analysiert und ausgewählt werden. Vorteilhaft ist es jedoch, wenn sich das Referenzmuster durch einen guten Wiedererkennungswert zu den anderen untersuchten Testmustern unterscheidet. So kann es die höchste oder eine optimale Kantenzahl aufweisen. Zusätzlich kann die Kantenanzahl bei einem bestimmten z. B. dem stärksten oder optimalsten Kontrastwert untersucht worden sein. Des Weiteren sollte das ausgewählte Referenzmuster in Auswertebereich eindeutig sein, damit es später auch genau auf den nachfolgenden Druckerzeugnissen wiedererkannt werden kann.

Um eine zuverlässige Qualitätskontrolle der nachfolgenden Druckerzeugnisse durchführen zu können, wird in der Einlernphase eine optimale Belichtungszeit ermittelt. Unter optimal kann im Sinne der Erfindung verstanden werden, dass mit dieser Belichtungszeit die nachfolgenden Verarbeitungs- und Berechnungsschritte zur Ermittlung des Referenzmusters und dergleichen möglichst einfach und zuverlässig durchführbar sind. Hierzu können beispielsweise Testbilder der Druckerzeugnisse mit unterschiedlichen Belichtungs- oder Shutterzeiten erstellt werden. Diese Testbilder sollten jeweils denselben Ausschnitt auf den Druckerzeugnissen darstellen. Der Vergleich der Testbilder und damit die Ermittlung einer im weiteren Verlauf zu benutzenden Belichtungszeit, kann basierend auf einer Kenngröße erfolgen, welche zu jedem Testbild ermittelt wird. Hierzu bietet sich das Histogramm des Testbildes an, wobei beispielsweise eine Gleichverteilung oder eine Verschiebung zum Hellen hin als besonders vorteilhaft bewertet werden kann.

Ist auf den zu untersuchenden Testbildern auf der Suche nach einen Referenzmuster ein ein- oder mehrdimensionaler Barcode vorhanden, so ist es bevorzugt, wenn das Referenzmuster derart gewählt wird, dass der Barcode sich innerhalb des Referenzmuster befindet. Je nach Bewertungsverfahren zur Ermittlung des Referenzmusters kann dies durch die zugrundeliegenden Auswahlparameter ohne weiteres Zutun geschehen oder mit einer zusätzlichen Analyse aller Testmuster auf einen Barcode durch eines der bekannten Verfahren.

Bei dem Erzeugen der Testbilder, welche der nachfolgenden Verarbeitung zugeführt werden, ist es bevorzugt, dass diese bezüglich ihrer Anzahl und Position eine im Wesentlichen symmetrische Anordnung aufweisen. Diese Symmetrie kann sich sowohl auf die Mittel- wie auch auf die Querachse des Druckerzeugnisses beziehen. Auch ist eine achsensymmetrische Verteilung der Testbilder zu beiden Achsen möglich. Um eine im Wesentlichen symmetrische Verteilung zu erreichen, ist es bevorzugt, wenn über eine Lichtschranke die Länge des Druckerzeugnisses ermittelt wird. Des Weiteren sollte auch die Transportgeschwindigkeit ermittelt werden, um in die Zeitabstände beim Erzeugen der Testbilder mit einzufließen.

Für eine zuverlässige Qualitätskontrolle der nachfolgenden Druckerzeugnisse ist es vorteilhaft, wenn der Auswertebereich in dem Überprüfungsbild mit dem Auswertebereich des Referenzbildes korrespondiert. Hierbei ist je nach definierten Toleranzbereichen keine genaue Positionsübereinstimmung notwendig. Da jedoch für den weiteren Vergleich eine geringe Positionsabweichung des Auswertebereiches große Auswirkungen hätte, wird der Auswertebereich des Testbildes vorteilhafterweise nachjustiert. Hierzu wird im Testbild nach dem zuvor definierten Referenzmuster gesucht. Dieses und damit auch dessen Position kann definitionsgemäß eindeutig bestimmt werden. Des Weiteren wurde bei der Definition des Referenzmusters die relative Position des Auswertebereiches zu dem Referenzmuster bestimmt. Hierdurch ist es nun möglich, den Auswertebereich mit seinen Teilbereichen auf dem Testbild anhand des Referenzmusters auszurichten, so dass eine genaue Positionierung möglich ist.

Für den korrekten Ablauf der Einlern- und anschließenden Überprüfungsphase werden zu Beginn einige Konstanten für das Verfahren definiert. Zum Beispiel wird der oben erwähnte Schwellenwert für die Entscheidung einer Korrelationsauswertung oder eines Graustufenvergleichs vor der Einlernphase bestimmt. Weiterhin wird vor dem Beginn des Verfahrens auch festgelegt, wann ein Vergleich ein positives oder ein negatives Ergebnis liefert. Dies ist für jedes verwendete Vergleichsverfahren zu definieren. Ferner wird vor der Einlernphase auch eine minimale Lagetoleranz in x- und y-Richtung definiert, wobei die x-Richtung die Lage des zu überprüfenden Druckerzeugnisses in Transportrichtung und die y-Richtung die Lage des Druckerzeugnisses quer zu der Transportrichtung kennzeichnet. Außerdem ist noch festzulegen, wie viele Vergleiche von Teilbereichen fehlerhaft sein müssen, um auf ein nicht korrektes Druckerzeugnis zu schließen.

In einer bevorzugten Ausführungsform des Verfahrens wird die Einlernphase automatisch und selbstoptimierend erfolgen, wobei zunächst die Länge eines Druckerzeugnisses mittels Lichtschranken erfasst wird. Danach kann eine begrenzte Anzahl von Belichtungszeiten bzw. Shutterzeiten s zur Optimierung der Belichtungszeit automatisch getestet werden. Wenn beispielsweise drei unterschiedliche Belichtungszeiten mit s = 3 zur automatischen Optimierung der Belichtungszeit erforderlich sind, so ist nun nur noch ein weiteres Druckerzeugnis erforderlich, um die Anzahl und die Position der möglichen Testquadrate auf dem Druckerzeugnis in Transportrichtung zu ermitteln. Dazu kann eine optimale symmetrische Anordnung auf dem Druckerzeugnis, wie beispielsweise einem gleichartig bedruckten Papierbogen, erfolgen.

Eine Vorrichtung zum Überprüfen von gleichartigen Druckerzeugnissen, insbesondere von gleichartigen bedruckten Papierbögen, weist eine Digitalkamera zum Aufnehmen von Testbildern des Druckerzeugnisses auf. Darüberhinaus besitzt die Vorrichtung eine Beleuchtungseinrichtung zum Beleuchten des Druckerzeugnisses. Schließlich kann die Vorrichtung einen Eingang zum Zuführen eines Positionssignals aufweisen, um die relative Lage eines Überprüfungsbildes in Bezug auf den Rand des Druckerzeugnisses zu ermitteln oder zu überprüfen. Darüberhinaus weist die Vorrichtung eine Steuer- und Auswerteeinrichtung zum Ansteuern der Digitalkamera und der Beleuchtungseinrichtung und zum Auswerten von Bilddaten der Digitalkamera auf.

Wie bereits oben erwähnt ist die Steuer- und Auswerteeinrichtung zusammen mit der Beleuchtungseinrichtung und der Digitalkamera zum Durchführen einer Einlernphase eingerichtet, bei der an mehreren Stellen des Druckerzeugnisses mit der Digitalkamera Testbilder aufgenommen werden. Die Auswerteeinrichtung dient dabei zum Auswerten von Auswertebereichen der aufgenommenen Testbilder im Hinblick auf ihre charakteristischen Informationen. Außerdem ermöglicht die Auswerteeinrichtung ein Auswählen eines Testbildes mit den kennzeichnungskräftigsten charakteristischen Informationen als Referenzbild. Schließlich dient die Auswerteeinrichtung dem Überprüfen der nachfolgenden gleichartigen Druckerzeugnisse durch Aufnehmen von Überprüfungsbildern an zu dem Referenzbild gehörenden Positionen und durch Vergleich der aufgenommenen Überprüfungsbilder mit den Bilddaten des Auswertebereiches des Referenzmusters.

Diese Vorrichtung hat den Vorteil, dass sie mit einem vertretbaren technischen Aufwand und in einer dem Maschinentakt anpassbaren Zeitspanne eine Überprüfung von gleichartigen Druckerzeugnissen ermöglicht.

Die Beleuchtungseinrichtung weist vorzugsweise ein Leuchtdioden-Array auf, in dem Leucht- oder Laserdioden in Zeilen und Spalten angeordnet sind. Durch dieses Leuchtdioden-Array wird sichergestellt, dass ein gleichförmiges Ausleuchten von Teilquadraten in dem Überprüfungsquadrat möglich ist. Außerdem wird bei der Einlernphase ein Optimieren und Anpassen der Belichtungszeiten bzw. Shutterzeiten s an eine optimale Ausleuchtung mit optimalen Kontrastwerten und der Möglichkeit, klare Ergebnisse für die Feststellung von Kantenzahlen zu erhalten, erreicht. Die Beleuchtungseinrichtung kann darüber hinaus vier Laserdioden an den vier Ecken der Beleuchtungseinrichtung aufweisen, die ein Beleuchtungsfeld sichtbar auf dem Druckerzeugnis begrenzen.

Außerdem kann die Vorrichtung mindestens eine Lageerfassungsvorrichtung des Druckerzeugnisses auf dem Transportband aufweisen, die ihrerseits mindestens eine Lichtschranke besitzt, welche einen Rand des Druckerzeugnisses auf der Transporteinrichtung in Transportrichtung erfasst. Auch kann die Lichtschranke die gesamte Länge des Druckerzeugnisses in Transportrichtung und auch die Erstreckung quer zur Transportrichtung durch entsprechende Zusatzlichtschranken erfassen. Mit Hilfe der Lichtschranken ist es möglich, die in der Einlernphase vorgesehenen Testbilder im Wesentlichen gleichmäßig und symmetrisch auf dem Druckerzeugnis in Transportrichtung automatisch anzuordnen.

In einer weiteren bevorzugten Ausführungsform der Erfindung weist die Vorrichtung eine Anpressvorrichtung zum Anpressen des Druckerzeugnisses auf die Transporteinrichtung mindestens im Bereich des zu erfassenden Überprüfungsbildes im Aufnahmebereich der Digitalkamera auf. Diese Anpressvorrichtung kann eine Druckluftdüse aufweisen und somit das Druckerzeugnis auf eine Fläche der Transporteinrichtung pressen und hierdurch die Bildschärfe der von der Digitalkamera erstellten Bilder erhöhen bzw. sicherstellen

In jedem der hier im Zusammenhang beschrieben einzelnen Verfahrensschritten kann jeweils ein einzelner separater Erfindungsgedanke gesehen werden. Daher ist es auch erfindungsgemäß, die Schritte in anderer Reihenfolge, alleine oder unter Auslassungen einiger der Schritte durchzuführen.

Die Rechen- und Auswerteschritte des erfindungsgemäßen Verfahrens werden bevorzugt auf der Recheneinrichtung als Computerprogramm ausgeführt.

In grundsätzlich bekannter Weise kann dieses Computerprogramm auf einem computerlesbaren Datenträger, in einem ROM eines Mikrocontrollers, oder eines programmierbaren Logikbausteins gespeichert sein.

Die Erfindung wird nun anhand der beigefügten Figuren näher erläutert.
- Figur 1: zeigt eine schematische perspektivische Ansicht einer Vorrichtung zum Überprüfen von Druckerzeugnissen gemäß der Erfindung;
- Figur 2: zeigt eine Prinzipskizze der Ausführungsform gemäß Figur 1;
- Figuren 3 bis 7: zeigen Prinzipskizzen zur Erläuterung von einzelnen Verfahrensschritten während einer Einlernphase;

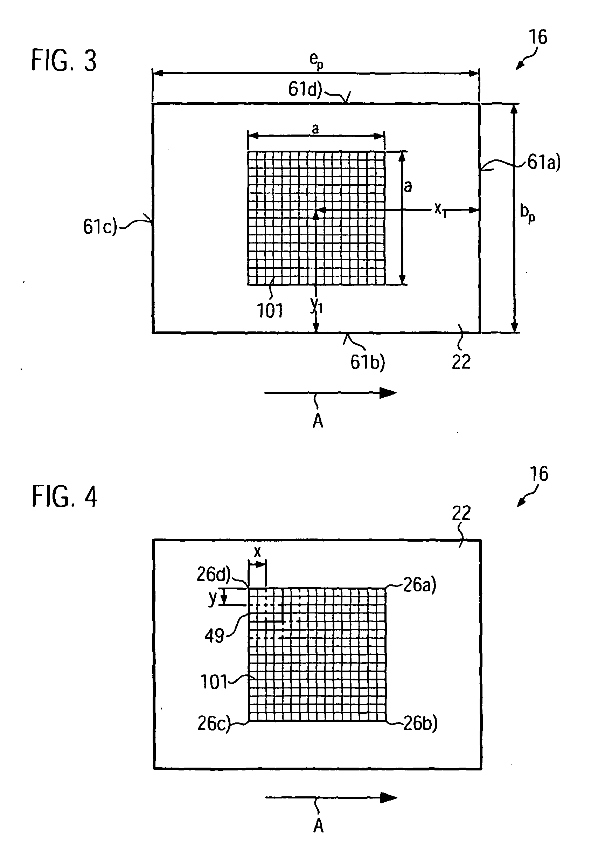

- Figur 3: zeigt eine schematische Ansicht eines Testbildes;
- Figur 4: zeigt eine schematische Ansicht eines Testbildes gemäß Figur 3 während der Ermittlung eines Referenzmusters;

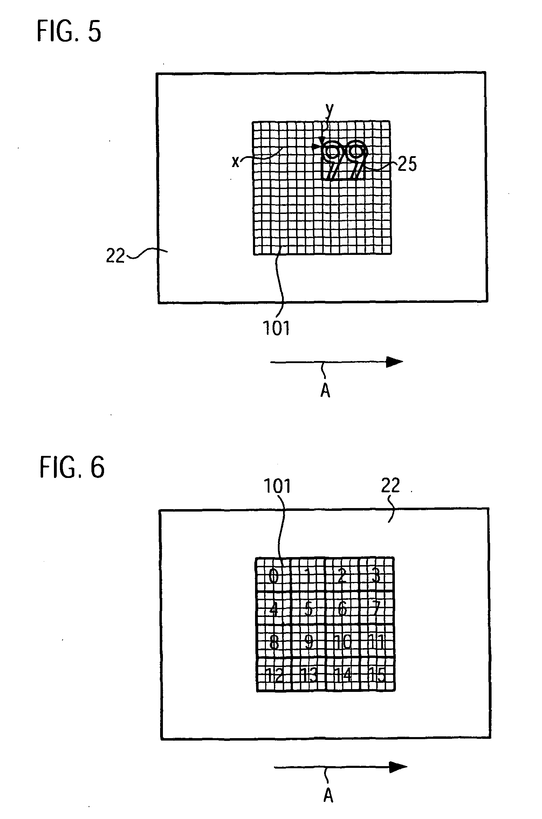

- Figur 5: zeigt eine schematische Ansicht eines Testbildes und ein ermitteltes Referenzmuster;
- Figur 6: zeigt eine schematische Ansicht eines Testbildes mit einem in Teilbereiche aufgeteilten Auswertebereich;

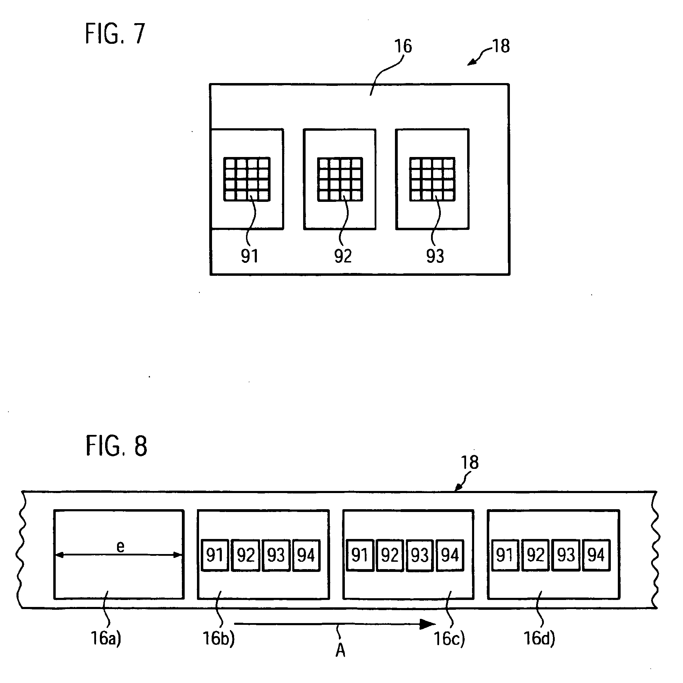

- Figur 7: zeigt eine schematische Aufsicht auf ein Druckerzeugnis mit mehreren Testbildern;
- Figuren 8 bis 11: zeigen Prinzipskizzen von einzelnen Verfahrensschritten einer automatischen Einlernphase;
- Figur 8: zeigt vier Druckerzeugnissen und verdeutlicht die mit ihnen durchgeführten Verfahren;

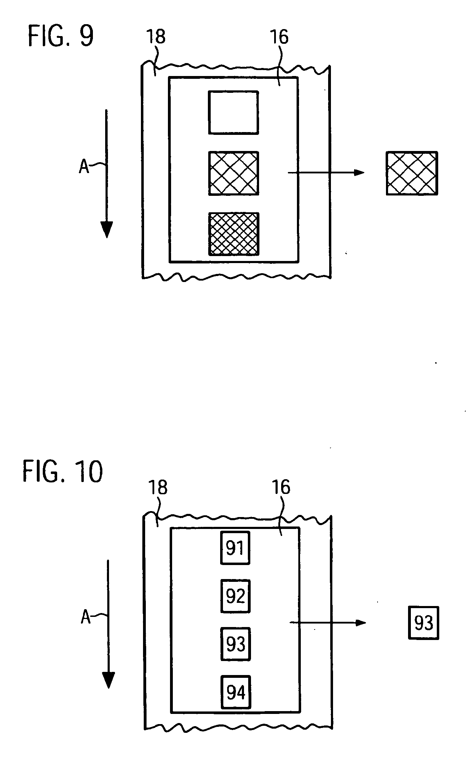

- Figur 9: zeigt eine vereinfachte Darstellung ein Druckerzeugnis mit Testbildern, die zu unterschiedlich langen Belichtungszeiten aufgenommen wurden;
- Figur 10: zeigt eine schematische Aufsicht auf ein Druckerzeugnis mit vier Testbildern;

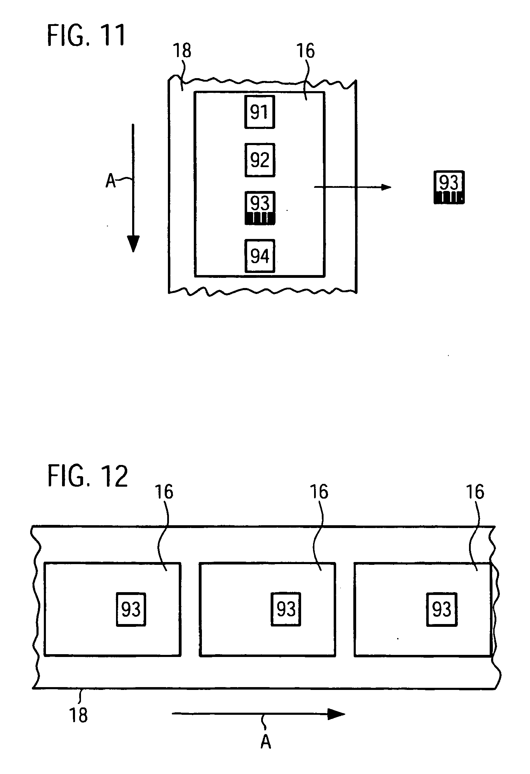

- Figur 11: zeigt eine schematische Aufsicht auf ein Druckerzeugnis, das zusätzliche Barcode-Marken aufweist; und
- Figur 12: zeigt drei Druckerzeugnisse zur Verdeutlichung der Überprüfungsphase.

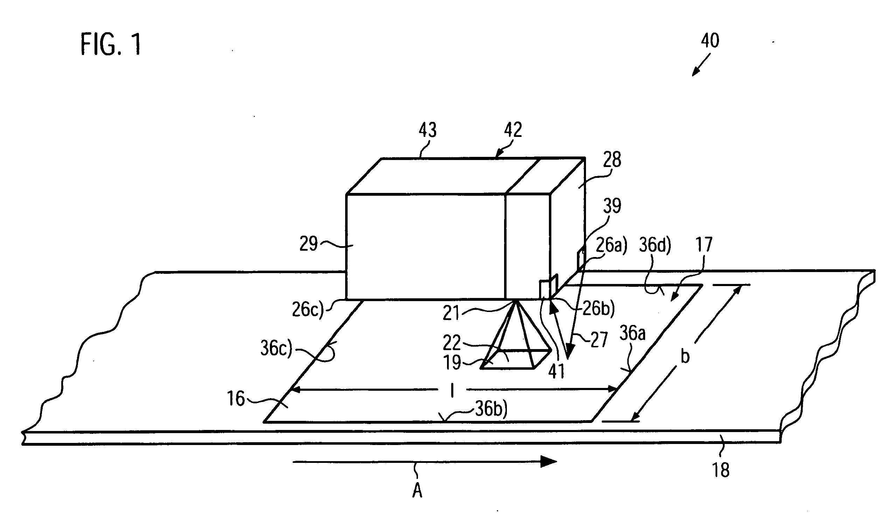

Figur 1 zeigt eine schematische perspektivische Ansicht einer Vorrichtung 40 zum Überprüfen von Druckerzeugnissen 16 gemäß der Erfindung. Diese Vorrichtung 40 weist einen Bogenidentifikations-Sensor 42, im Folgenden BIS genannt, auf. Der BIS 42 besteht aus einem Bildaufnahmechip in Form einer Digitalkamera 21 mit Optik und einer Beleuchtungseinrichtung 29 sowie einem Auswerterechner in einer Steuer- und Auswerteeinrichtung 28. In dieser Ausführungsform der Erfindung ist der BIS 42 mit Beleuchtungseinrichtung 29, Digitalkamera 21 und Auswerterechner in einem gemeinsamen Sensorgehäuse 43 untergebracht.

Der BIS 42 ist derart an einer Maschine zum Druckerzeugnistransport integriert oder angebracht, dass die zu überprüfenden Druckerzeugnisse 16 in Form von Papierbögen 17 am BIS 42 in Transportrichtung A entlang geführt werden, wobei das Druckerzeugnis 16 von der Digitalkamera 21 an unterschiedlichen Stellen 19 erfasst wird. Dazu liegt das Druckerzeugnis 16 auf einer Transporteinrichtung 18 auf, die in Transportrichtung A bewegt wird. Ein Rand 36a) des Druckerzeugnisses wird mit einem Triggersensor in Form einer Lichtschranke 27 erfasst, die einen Lasersender 39 und einen entsprechenden Empfänger 41 auf den vorderen Ecken 26a) und 26b) des Gehäuses 43 aufweist.

Mit Hilfe dieser Lichtschranke 27 kann die Fördergeschwindigkeit in Transportrichtung A in Verbindung mit einem Drehgebersignal aus der Maschine gemessen werden. In dem BIS 42 werden die Drehgeber-Impulse nach Auslösen des Triggersensors in Form einer Lichtschranke 27 abgezählt und nach einer festgelegten Anzahl ein Testbild 22 ausgelöst. Damit kann ein Bildausschnitt in Förderrichtung beliebig auf dem Druckerzeugnis 16 verschoben werden und die Position des Testbildes 22 relativ zur dem Rand 36a) des Druckerzeugnisses 16 ermittelt werden.

Die Bildauswertung erfolgt dabei im Maschinentakt durch die Steuer- und Auswerteeinrichtung 28, so dass eine ausreichende Kontrolle auch bei maximaler Maschinengeschwindigkeit mit der erfindungsgemäßen Vorrichtung ermöglicht wird. Neben der Auswertemöglichkeit von Bilddaten des Testbildes 22 beinhaltet der BIS 42 auch eine Codelese-Software, vorzugsweise für Barcodes, die beliebig im Erfassungsbereich des BIS 42 auf der Länge I oder der Breite b des Druckerzeugnisses 16 angeordnet sein können. Bevorzugt wird das Testbild 22 derart gewählt, dass der Barcode innerhalb des Bildes liegt.

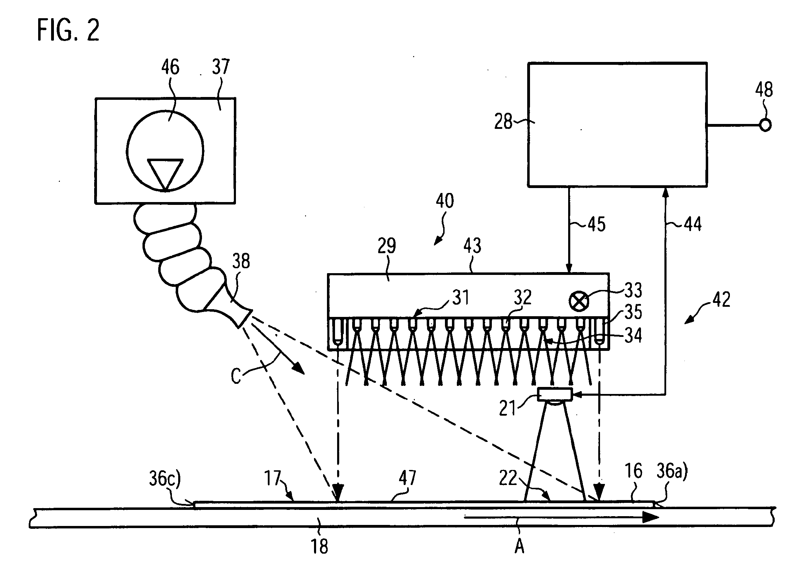

Figur 2 zeigt eine Prinzipskizze der Ausführungsform gemäß Figur 1. In dieser Prinzipskizze sind die Komponenten wie Digitalkamera 21, Beleuchtungseinrichtung 29 sowie Steuer- und Auswerteeinrichtung als Blöcke dargestellt, die über entsprechende Schnittstellen 44 und 45 bzw. Busleitungen miteinander verknüpft sind. Die Beleuchtungseinrichtung 29 weist ein Leuchtdioden-Array 31 auf, wobei die Leuchtdioden 32 in Zeilen 33 und Spalten 34 angeordnet sind. An den Ecken des Gehäuses der Beleuchtungseinrichtung 29 sind Laserdioden 35 angeordnet, um auf dem Druckerzeugnis 16 die Grenzen der beleuchteten und zu untersuchenden Fläche eines Testquadrats in einer Einlernphase bzw. eines Überprüfungsquadrats in einer Überprüfungsphase anzuzeigen. Diese Anzeige ist für das Durchführen des erfindungsgemäßen Verfahrens nicht notwendig, sondern dient lediglich zur Anzeige für die Transportvorrichtung überwachendes Personal.

Zusätzlich zu den bereits in Figur 1 erläuterten Komponenten, die in dieser Figur 2 mit gleichen Bezugszeichen gekennzeichnet sind, zeigt diese schematische Darstellung außerdem eine Anpressvorrichtung 37 mit einem Kompressor 46, der Pressluft über eine Pressluftdüse 38 auf den beleuchteten Bereich des Druckerzeugnisses 16 in Pfeilrichtung C bläst und damit ein Anpressen des Druckerzeugnisses 16 auf die Transporteinrichtung 18 bewirkt, um einen eingestellten Abstand zwischen Digitalkamera 21 und der Oberfläche 47 des Druckerzeugnisses zu erreichen. Die Optik der Digitalkamera bzw. deren Bildaufnahmechips sind auf diesen Abstand eingestellt, so dass scharfe Bilder erzeugt werden können.

Mit einer erfindungsgemäßen Vorrichtung 40 ist es möglich, dass der BIS 42 die Qualität, wie die Lage und den Aufdruck, bzw. die Gleichartigkeit des Druckerzeugnis 16 anhand des Testbildes 22 überprüft, ohne dass zusätzlich ein Code aufgedruckt sein muss. Dazu kann zu Beginn einer Produktion ein charakteristischer Ausschnitt des Testbildes in den Sensor eingelernt werden. Alle weiteren gleichartigen Druckerzeugnisse 16 werden dann mit der eingelernten Vorlage verglichen und bei abweichenden Druckerzeugnissen wird ein entsprechendes "Falschsignal" als Ausgangssignal an dem Ausgang 48 der Steuer- und Auswerteeinrichtung 28 gesetzt.

Dazu basiert das Vergleichsverfahren auf einem beim Einlernen abgespeicherten Testbild und daraus ermittelten Vergleichsparametern. Dieses Testbild wird dann als Referenzbild bezeichnet, wobei zum Vergleichen ein Auswertebereich des gesamten Bildes verwendet wird. Beim Inspizieren der Druckerzeugnisse 16 wird beispielsweise von jedem Papierbogen ein oder mehrere Überprüfungsbilder aufgenommen und diese unter Berücksichtigung der Vergleichsparameter mit dem eingelernten Auswertebereich des Referenzbildes verglichen.

Über entsprechende Vergleichsparameter kann die Toleranz des Verfahrens gegenüber beispielsweise der Änderungen der Lage oder der Helligkeit beeinflusst werden. Im Folgenden werden nun mit den Figuren 3 bis 7 einzelne Verfahrensschritte während einer Einlernphase erläutert.

Figur 3 zeigt dazu eine schematische Ansicht eines Testbildes 22 einer Länge l_{P} und einer Breite b_{P}. Dieses Testbild 22 zeigt einen Teilausschnitt eines Druckerzeugnisses 16, welches auf der Transporteinrichtung 18 aufliegt. Die Größe des Testbildes 22 wird durch den in der Digitalkamera 21 verwendeten bildaufnehmenden Chip bestimmt. Das Testbild wird von der oben erwähnten Beleuchtungseinrichtung 29 ausgeleuchtet.

Innerhalb des Testbildes 22 wird ein bevorzugt zentral liegender Auswertebereich 101 definiert. Dieser Auswertebereich 101 ist hier quadratisch mit der Kantenlänge a dimensioniert. Der Auswertebereich 101 kann mittig, wie in Figur 3 gezeigt, in einem Abstand x₁ von der Kante 61a) und y₁ von der Kante 61b) des Testbildes 22 angeordnet sein.

Figur 4 zeigt eine schematische Ansicht eines Testbildes gemäß Figur 3 während der Ermittlung eines Referenzmusters 25. Für ein stabiles Arbeiten der Identifikation wird nun in Figur 4 eine geeignete Vorlage innerhalb des Auswertebereichs 101 gesucht. Das bedeutet, es wird ein Testmuster 49 als Referenzmuster 25 innerhalb des Auswertebereichs 101 gewählt, das eindeutig und relativ leicht wiederzuerkennen ist. In diesem Fall wird ein quadratisches Testmuster gesucht. Es sind jedoch auch andere Formen für das Testmuster möglich, welche in Bezug auf die Auflösung der Kamera ausreichend gut definierbar sind. Hierbei wird ein Ausschnitt mit einer zuvor festgelegten Größe virtuell über den gesamten Auswertebereich geschoben. Somit werden viele unterschiedliche Testmuster definiert. Für jedes ermittelte Testmuster werden die Kantenanzahl und der maximale Kontrastbereich ermittelt. Anschließend wird das Testmuster als Referenzmuster 25 definiert, welches beim maximalen Kontrast eine maximale Kantenanzahl aufweist.

Figur 5 zeigt eine schematische Ansicht eines Testbildes 22 und ein ermitteltes Referenzmuster 25 innerhalb des Auswertebereiches 101. Dieses Referenzmuster 25 erscheint einmalig im Auswertebericht 101 des Testbildes 22. Die linke obere Ecke des Referenzmusters 25 liegt bei den Koordinaten x und y, welche ihren Ursprung in der linken oberen Ecke des Auswertebereiches 101 haben. Das Referenzmuster 25 hebt sich hier durch das Ziffernsymbol 99 auf dem Druckerzeugnis 16 hervor.

Figur 6 zeigt eine schematische Ansicht eines Testbildes 22 mit einem in sechzehn Teilbereiche 0 -15 aufgeteilten Auswertebereich 101. Hierbei haben die Teilbereiche eine quadratische Grundform, so dass auch von Teilquadraten 0 - 15 gesprochen werden kann. Wie auch schon die Testmuster könnten sie aber auch jede andere Form aufweisen. Die Teilquadrate 0 bis 15 werden bei der Überprüfung von Gleichartigkeit und Lagekonformität des Druckerzeugnisses 16 verwendet. Dabei kann die Anzahl der Teilquadrate n² betragen und ist nicht auf die Zahl sechzehn, wie in Figur 6 gezeigt, limitiert. Es können sowohl weniger Teilquadrate als auch mehr Teilquadrate in einem entsprechenden Auswertebereich 101 definiert werden. Für jedes Teilquadrat werden in der Einlernphase die Kantenanzahl und/oder ein Kontrastwert bestimmt. Diese sind von Teilquadrat zu Teilquadrat durchaus unterschiedlich, und es können auch Teilquadrate auftreten, die keinerlei signifikante Merkmale oder Bilddaten enthalten. Diese weisen meist keine oder nur eine geringe Anzahl an Kanten auf.

Die ermittelten Werte zu den einzelnen Teilbereichen werden anschließend bewertet, um festzustellen, ob das Testbild 22 mit seinem Auswertebereich 101 für eine Qualitätskontrolle der Druckerzeugnisse 16 geeignet ist. Dieser Prozess wird nun in Bezug auf Figur 7 weiter beschrieben.

Figur 7 zeigt dementsprechend eine schematische Draufsicht auf ein Druckerzeugnis 16 mit mehreren Testbilder 91 bis 93. Wenn ein Benutzer eine derartige Einlernphase manuell durchführen soll, stellt dies eine erhebliche Fehlerquelle dar, insbesondere, wenn eine größere Anzahl solcher BIS Sensoren in einer Maschine zum Einsatz kommen. Daher ist es von Vorteil, wenn der Sensor zumindest in Transportrichtung A selbständig geeignete Testbilder auswertet, um ein geeignetes Testbild als Referenzbild zu definieren. Wie bereits in Bezug auf Figur 6 beschrieben, wird zu jedem Testquadrat die Kantenanzahl ermittelt. Je mehr Kanten ein Testquadrat aufweist, umso besser ist es für die Qualitätsüberprüfung geeignet, da sich bei einer Korrelierung mit einem korrespondierenden Testquadrat auf einem nachfolgenden zu überprüfenden Druckerzeugnis eindeutige Aussagen zur Qualität tätigen lassen. Die Testquadrate, welche lediglich eine Kantenanzahl aufweisen, welche unterhalb eines definierten Grenzwertes liegt, können bei der Korrelierung keine aussagekräftigen Daten liefern. Daher wird für diese Quadrate der mittlere Grauwert errechnet und dieser mit dem korrespondierenden Testquadrat auf den zu überprüfenden nachfolgenden Druckerzeugnissen verglichen. Die Anzahl der Testquadrate, welche zu einem Vergleich basierend auf Korrelierung geeignet sind, hängt von dem gewählten Testbild 91, 92, 93 ab. Daher werden in der Einlernphase von einem Druckerzeugnis wenn möglich mehrere Testbilder 91, 92, 93 angefertigt, die dann bezüglich ihrer Eignung für die Qualitätsüberprüfung bewertet werden. Hierbei wird dasjenige Testbild 91, 92, 93 als Referenzbild gewählt, welches die meisten Testquadrate aufweist, die eine Kantenanzahl über dem Grenzwert haben, da diese für den bevorzugten Vergleich mittels Korrelierung geeignet sind.

Figur 8 zeigt vier Druckerzeugnisse 16a), 16b), 16c) und 16d) auf einer Transporteinrichtung 18 und dient zum Veranschaulichen des automatischen Verteilens der Testbilder auf den Druckerzeugnissen, wobei in einer derartigen automatischen Einlernphase die Bewegung der Transporteinrichtung 18 in Transportrichtung A genutzt wird, und der BIS gegenüber der Transportrichtung A nicht quer versetzt wird, so dass hier eine Mittenposition für sämtliche aneinandergereihte Testbilder 91 bis 94 auf dem jeweiligen Druckerzeugnis 16 erfolgt. Bei dieser automatischen Einlernphase wird zunächst mit dem Druckerzeugnis 16a) lediglich die Länge I des Druckerzeugnisses automatisch bestimmt, indem entsprechende Lichtschranken des BIS in Zusammenwirken mit dem Maschinenvortrieb aktiviert werden. Durch die Lichtschanke sind die Zeitpunkte, zu dem ein Druckerzeugnis die Lichtschranke erreicht und wieder verlässt, bekannt. Da außerdem der erfindungsgemäßen Vorrichtung 40 die Bewegungsgeschwindigkeit des Transportbandes bekannt ist, kann die Länge eines Druckerzeugnisses ermittelt werden. Hierzu wird nur das Vorbeitransportieren eines Druckerzeugnisses 16a) benötigt. Anschließend werden Testbilder 91, 92, 93 und 94 gleichmäßig in Bezug auf die Länge I von den folgenden Druckerzeugnissen 16b), 16c) und 16d) erstellt.

In diesen weiteren drei Exemplaren von Druckerzeugnissen 16b), 16c) und 16d) wird die Belichtungszeit optimiert, wobei die Belichtungszeit beim Druckerzeugnis 16b) so hoch ist, dass kaum ein Kontrast auftritt und keine Strukturierung in den Testbildern 91 bis 94 erkennbar wird. Beim Druckerzeugnis 16c) wurde eine mittlere Belichtungszeit bzw. Shutterzeit s eingestellt, die deutliche Graustufenmittelwerte ermöglicht und in den Testbilder 91 bis 94 auch eine Festlegung von Teilquadraten mit entsprechender hoher oder niedriger Kantenzahl ermöglicht. Schließlich wurde die Belichtungszeit bzw. Shutterzeit s bei einem dritten Druckerzeugnis 16d) soweit heruntergefahren, dass die Testquadrate 91 bis 94 in der Dunkelheit kontrastarm erscheinen, was mit einem deutlich dunkleren Hintergrund in Figur 8 dargestellt wird. Anhand der verschiedenen Testbilder, welche auf unterschiedlichen Druckerzeugnissen 16b), 16c) und 16d) erstellt wurden, wird eine für das zu überprüfende Druckereierzeugnis optimale Shutterzeit s ermittelt.

In Figur 9 ist dies schematisch für verschiedene Testbilder auf einem Druckerzeugnis 16 dargestellt. Auch hier sind die unterschiedlichen Helligkeiten, welche durch unterschiedliche Shutterzeiten s erzeugt werden, verdeutlicht. In dieser hier verdeutlichten Ausführungsform der Erfindung kann der Bedarf an für eine Einlernphase erforderlichen Exemplaren der Druckerzeugnisse weiter dadurch reduziert werden, dass die unterschiedlichen drei Belichtungszeiten, wie sie in Figur 8 auf drei verschiedenen Druckerzeugnissen eingesetzt werden, nun nur auf einem Druckerzeugnis 16 durchgeführt werden, wobei die mittlere Belichtungszeit den höchsten Kontrastwert ergibt und somit bestimmend für die weiteren Untersuchungen in der Einlernphase und auch in der Überprüfungsphase ist. Dieses Verfahren ist vor allem dann zu verwenden, wenn auf den Druckerzeugnissen sich schnell wiederholende Muster aufgedruckt sind, so dass in jedem Testbild im Wesentlichen dieselben gedruckten Bereiche dargestellt sind.

Figur 10 zeigt eine schematische Draufsicht auf ein Druckerzeugnis 16 mit vier Bildern 91 bis 94, die nach Einstellung einer optimalen Belichtungszeit nun im Hinblick auf unterschiedliche auswertbare Bilddaten untersucht werden. Hierbei wird das Testbild als Referenzbild definiert, bei dem im Auswertebereich 101 die meisten Teilbereiche 0 bis 15 liegen, die eine Kantenanzahl oberhalb des definierten Schwellwertes aufweisen, wie in Bezug auf Figur 6 erläutert.

In Figur 11 ist auf dem Druckerzeugnis im Bereich des Testbildes 93 ein Barcode 24 vorhanden. Dieser ist beim Testbild 93 als Barcode 24 erkannt worden, so dass dieses Testbild 93 als Referenzbild definiert wird, da mittels eines Barcodes 24 besonderes gut die Gleichartigkeit und Lagerichtigkeit der nachfolgenden Druckerzeugnisse überprüft werden kann.

Der Einlernvorgang weist also die Schritte Ermitteln der Länge des Druckerzeugnisses, Ermitteln der optimalen Belichtungszeit, Bestimmen des Referenzbildes und Finden des Referenzmusters im Auswertebereich des Referenzbildes auf. Diese Schritte können zum Teil in verschiedener Reihenfolge oder auch zum Teil gleichzeitig ausgeführt werden.

Figur 12 dient zu Verdeutlichung des Überprüfungsverfahrens, nachdem die Einlernphase abgeschlossen ist. Diese Überprüfungsphase wird mittels eines einzigen Überprüfungsbildes 93 pro Druckerzeugnis 16 durchgeführt. Mit diesem nach der Einlernphase definierten Referenzbild wird bei den eigentlichen Überprüfungsschritten in Bezug auf die Gleichartigkeit und die Lagekonformität der zu überprüfenden Druckerzeugnisse ein Optimum an Zeitersparnis erreicht, indem nur noch ein Vergleich bezüglich der Teilquadrate 0 bis 15 des Auswertebereichs 22 des Referenzbildes mit dem Auswertebereich des Überprüfungsbild, welches für jedes zu überprüfende Druckerzeugnis erstellt wird, durchgeführt wird. Um den Auswertebereich innerhalb eines Überprüfungsbildes genau bestimmen und somit auch die genaue Position der Teilquadrate ermitteln zu können, wird das Referenzmuster verwendet. Dieses eindeutige Muster, dessen exakte Position bezüglich des Auswertebereich bekannt ist, wird in dem Überprüfungsbild ermittelt, um daran den Auswertebereich und somit auch die Teilquadrate auszurichten.

Somit wird sowohl die Gleichartigkeit als auch die Lagekonformität für die einzelnen Druckerzeugnisse vor dem Einbringen beispielsweise in eine Buchbindemaschine, eine Zusammentragmaschine, eine Falzmaschine eine Verpackungsmaschine oder andere Maschinen zur Druck-Nachverarbeitung überprüft. Dafür ist von entscheidender Bedeutung, dass eine optimale möglichst automatische erfindungsgemäße Einlernphase, die mit dem Maschinentakt Schritt halten kann, vorgesehen wird.

## Patentansprüche

1. Verfahren zum Überprüfen von gleichartigen Druckerzeugnissen (16), insbesondere von gleichartigen bedruckten Papierbögen (17), die von einer Transporteinrichtung (18) transportiert werden, bei dem
- in einer Einlernphase an mehreren Stellen des Druckerzeugnisses (16) mit einer Digitalkamera (21) Testbilder (22) aufgenommen werden,
- innerhalb jedes Testbildes (22) ein Auswertebereich (101) definiert wird, welcher kleiner oder gleich der Größe des Testbildes (22) ist,
- jeder Auswertebereich (101) im Hinblick auf seine charakteristischen Informationen ausgewertet wird,
- als ein Referenzbild (23) das Testbild (22) ausgewählt wird, in dem der Auswertebereich (101) mit den kennzeichnungskräftigsten charakteristischen Informationen liegt,
- die nachfolgenden gleichartigen Druckerzeugnisse (16) durch Aufnahme mindestens eines Überprüfungsbildes an einer dem Referenzbild (23) korrespondierenden Position und durch Vergleich zumindest eines Teilbereiches des Überprüfungsbildes mit dem Auswertebereich des Referenzbildes (23) anhand von Bilddaten überprüft werden,
- zum Ermitteln eines Referenzbildes (23) der Auswertebereich (101) in eine Mehrzahl von Teilbereichen (0 bis 15) aufgeteilt wird, die im Hinblick auf ihre charakteristischen Informationen ausgewertet werden, und
- zum Überprüfen von nachfolgenden Druckerzeugnissen (16) ein Vergleich charakteristischer Informationen der Teilbereiche (0 bis 15) des Auswertebereiches (101) des Referenzbildes mit korrespondierenden Teilbereichen (0 bis 15) des Überprüfungsbildes erfolgt,
wobei für die Teilbereiche aufgrund von deren Bildinhalt ermittelt wird, ob ein Vergleich durch Korrelationsverfahren oder ein Vergleich der Graustufenmittelwerte erfolgt.

2. Verfahren nach Anspruch 1,
**dadurch gekennzeichnet,**
**dass** die Teilbereiche (0 bis 15) im Hinblick auf ihre charakteristischen Informationen ausgewertet werden, indem die Kantenanzahl und/oder der Kontrastwert jedes Teilbereiches (0 bis 15) ermittelt wird.

3. Verfahren nach Anspruch 2,
**dadurch gekennzeichnet,**
**dass** bei Unterschreiten eines Schwellenwertes in Bezug auf die Kantenanzahl in einem der Teilbereiche (0 bis 15) ein Graustufenmittelwert des Teilbereichs (0 bis 15) ermittelt und registriert wird.

4. Verfahren nach Anspruch 2 oder 3,
**dadurch gekennzeichnet,**
**dass** der Vergleich durch Korrelationsverfahren oder durch Vergleich der Graustufenmittelwerte in Abhängigkeit vom Unterschreiten eines Schwellwertes in Bezug auf die Kantenanzahl erfolgt.

5. Verfahren nach einem der vorhergehenden Ansprüche,
**dadurch gekennzeichnet,**
**dass** als Referenzbild mit dem Auswertebereich (101), welcher die kennzeichnungskräftigsten charakteristischen Informationen aufweist, das Testbild (22) ausgewählt wird, bei dem die meisten Teilbereiche (0 bis 15) eine Kantenanzahl aufweisen, welche über einem Schwellwert liegt.

6. Verfahren nach einem der Ansprüche 1 bis 5,
**dadurch gekennzeichnet,**
**dass** im Auswertebereich (101) ein Referenzmuster (25) bestimmt wird, und
**dass** zum Bestimmen des Referenzmusters (25) eine Vielzahl von Testmustern, die sich überlappen können, im Auswertebereich (101) definiert und bewertet werden.

7. Verfahren nach Anspruch 6,
**dadurch gekennzeichnet,**
**dass** das Referenzmuster (25) von den übrigen bewerteten Testmustern durch eine optimale Kantenzahl bei einem optimalen Kontrastwert und durch Eindeutigkeit unterschieden wird.

8. Verfahren nach einem der vorhergehenden Ansprüche,
**dadurch gekennzeichnet,**
**dass** Testbilder (22) mit unterschiedlichen Belichtungszeiten bzw. Shutterzeiten (s) erzeugt werden und
**dass** zur Optimierung der Belichtungszeit mindestens eine Kenngröße zu jedem erzeugten Bild, insbesondere ein Histogramm, ermittelt und bewertet wird.

9. Verfahren nach einem der vorhergehenden Ansprüche,
**dadurch gekennzeichnet,**
**dass** beim Vorhandensein eines Barcodes (24) auf dem Druckerzeugnis (16) das Referenzmuster (25) den Barcode (24) aufweisend ausgewählt wird.

10. Verfahren nach einem der vorhergehenden Ansprüche,
**dadurch gekennzeichnet,**
**dass** die Anzahl und die Position der möglichen Testbilder (22) auf dem Druckerzeugnis (16) in Transportrichtung (A) derart ermittelt wird, dass eine im Wesentlichen symmetrische Anordnung zur Mitte des Druckerzeugnisses erfolgt.

11. Verfahren nach einem der Ansprüche 1 bis 10,
**dadurch gekennzeichnet,**
**dass** zur Ausrichtung des Auswertebereiches (10) auf einem Überprüfungsbild, das bestimmte Referenzmuster (25) auf dem Überprüfungsbild identifiziert wird und
**dass** die zu untersuchenden Teilbereichen (0 bis 15) des Überprüfungsbildes in Abhängigkeit der Position des Referenzmusters (101) definiert werden.

12. Vorrichtung (40) zum Überprüfen von gleichartigen Druckerzeugnissen (16), insbesondere von gleichartigen bedruckten Papierbögen (17), mit
- einer Digitalkamera (21) zum Aufnehmen von Testbildern (22) des Druckerzeugnisses (16),
- einer Beleuchtungseinrichtung (29) zum Beleuchten des Druckerzeugnisses (16),
- einem Eingang zum Zuführen eines Positionssignals,
- einer Steuer- und Auswerteeinrichtung (28) zum Ansteuern der Digitalkamera (21) und der Beleuchtungseinrichtung (29) und zum Auswerten von Bilddaten der Digitalkamera (21),
wobei die Steuer- und Auswerteeinrichtung (28) zusammen mit der Beleuchtungseinrichtung (29) und der Digitalkamera (21) zum Durchführen einer Einlernphase eingerichtet ist, bei der an mehreren Stellen des Druckerzeugnisses (16) mit der Digitalkamera (21) Testbilder (22) aufgenommen werden,
- zum Auswerten von Auswertebereichen (101) der aufgenommenen Testbilder (22) im Hinblick auf ihre charakteristische Informationen,
- zum Auswählen eines Testbildes (22) mit dem Auswertebereich (101), mit den kennzeichnungskräftigsten charakteristischen Informationen als Referenzbild (23) und
- zum Überprüfen der nachfolgenden gleichartigen Druckerzeugnisse (16) durch Aufnehmen von Überprüfungsbildern an zu dem Referenzbild (23) gehörenden Positionen und durch Vergleich von Auswertebereichen (101) der aufgenommenen Überprüfungsbilder (23) mit den Bilddaten des Auswertebereiches (101) des Referenzbildes (23),
wobei ein Vergleich charakteristischer Informationen der Teilbereiche (0 bis 15) des Auswertebereiches (101) des Referenzbildes mit korrespondierenden Teilbereichen (0 bis 15) des Überprüfungsbildes erfolgt und
wobei für die Teilbereiche aufgrund von deren Bildinhalt ermittelt wird, ob ein Vergleich durch Korrelationsverfahren oder ein Vergleich der Graustufenmittelwerte erfolgt.

13. Vorrichtung nach Anspruch 12,
**dadurch gekennzeichnet,**
**dass** eine Lichtschranke (27) vorgesehen ist, die den Beginn und/oder das Ende (36a bis 36d) des Druckerzeugnisses (16) auf der Transporteinrichtung (18) in Transportrichtung (A) erfasst.

14. Vorrichtung nach einem der Ansprüche 12 oder 13,
**dadurch gekennzeichnet,**
**dass** die Vorrichtung eine Anpressvorrichtung (37) zum Anpressen des Druckerzeugnisses (16) auf die Transporteinrichtung (18) mindestens im Bereich des zu erfassenden Überprüfungsbildes im Aufnahmebereich der Digitalkamera (21) aufweist.

15. Computerprogramm mit Programmcodemitteln, um die Verfahrensschritte eines Verfahrens nach einem der Ansprüche 1 bis 11 durchzuführen, wenn das Computerprogramm auf einer mit einer Digitalkamera (21) wirkungsmäßig verbundenen Recheneinrichtung ausgeführt wird.

16. Computerprogrammprodukt mit Programmcodemitteln, die auf einem computerlesbaren Datenträger gespeichert sind, um die Verfahrensschritte eines Verfahrens nach einem der Ansprüche 1 bis 11 durchzuführen, wenn das Computerprogramm auf einer mit einer Digitalkamera (21) wirkungsmäßig verbundenen Recheneinrichtung ausgeführt wird.

## Claims

1. Method for inspecting similar print products (16), in particular similar printed paper sheets (17), which are transported by a transport means (18), wherein
- in a learning phase test images (22) are recorded at a plurality of points of the print product (16) with a digital camera (21),
- within each test image (22) an evaluation region (101) is defined which is smaller than or equal to the size of the test image (22),
- each evaluation region (101) is evaluated having regard to its characteristic information,
- as a reference image (23) the test image (22) in which the evaluation region (101) with the most distinctive characteristic information lies is selected,
- the subsequent similar print products (16) are inspected by recording of at least one inspection image at a position corresponding to the reference image (23) and by comparing at least one sub-region of the inspection image with the evaluation region of the reference image (23) using image data,
- in order to determine a reference image (23) the evaluation region (101) is divided into a plurality of sub-regions (0 to 15) which are evaluated having regard to their characteristic information, and
- in order to inspect subsequent print products (16) a comparison of characteristic information of the sub-regions (0 to 15) of the evaluation region (101) of the reference image with corresponding sub-regions (0 to 15) of the inspection image takes place,
wherein for the sub-regions it is determined on the basis of their image content whether a comparison takes place through correlation processes or a comparison of the average grayscale values.

2. Method according to claim 1,
**characterised in that**
the sub-regions (0 to 15) are evaluated having regard to their characteristic information by determining the number of edges and / or the contrast value of each sub-region (0 to 15).

3. Method according to claim 2,
**characterised in that**
if a threshold value is not reached having regard to the number of edges in one of the sub-regions (0 to 15) an average grayscale value of the sub-region (0 to 15) is determined and registered.

4. Method according to claim 2 or 3,
**characterised in that**
the comparison takes place through correlation processes or through comparison of the average grayscale values in dependence upon falling below a threshold value having regard to the number of edges.

5. Method according to one of the preceding claims,
**characterised in that**
as a reference image with the evaluation region (101) which comprises the most distinctive characteristic information the test image (22) is selected, in which most sub-regions (0 to 15) comprise a number of edges which lies above a threshold.

6. Method according to one of the claims 1 to 5,
**characterised in that**
a reference sample (25) is determined in the evaluation region (101), and **in that** in order to determine the reference sample (25) a plurality of test samples which can overlap are defined and evaluated in the evaluation region (101).

7. Method according to claim 6,
**characterised in that**
the reference sample (25) is distinguished from the other evaluated test samples by an optimal number of edges with an optimal contrast value and through uniqueness.

8. Method according to one of the preceding claims,
**characterised in that**
test images (22) are produced with different exposure times or shutter times (s) and
**in that** for optimisation of the exposure time at least one characteristic value is determined and evaluated for each image produced, in particular a histogram.

9. Method according to one of the preceding claims,
**characterised in that**
if a barcode (24) is present on the print product (16) the reference sample (25) comprising the barcode (24) is selected.

10. Method according to one of the preceding claims,
**characterised in that**
the number and the position of the possible test images (22) on the print product (16) are determined in the transport direction (A) in such a way that a substantially symmetrical arrangement to the middle of the print product takes place.

11. Method according to one of the claims 1 to 10,
**characterised in that**
for orientation of the evaluation region (10) on an inspection image the determined reference sample (25) is identified on the inspection image, and
**in that** the sub-regions (0 to 15) of the inspection image to be inspected are defined in dependence upon the position of the reference sample (101).

12. Device (40) for inspecting similar print products (16), in particular similar printed paper sheets (17), with
- a digital camera (21) for recording test images (22) of the print product (16),
- a lighting means (29) for illuminating the print product (16),
- an input for feeding a position signal,
- a control and evaluation means (28) for controlling the digital camera (21) and the lighting means (29) and for evaluating image data of the digital camera (21),
wherein the control and evaluation means (28) is adapted together with the lighting means (29) and the digital camera (21) to carry out a learning phase, in which at a plurality of points of the print product (16) test images (22) are recorded with the digital camera (21),
- for evaluation of evaluation regions (101) of the recorded test images (22) having regard to their characteristic information,
- for selection of a test image (22) with the evaluation region (101) with the most distinctive characteristic information as a reference image (23) and
- for inspection of the subsequent similar print products (16) by recording inspection images at positions belonging to the reference image (23) and by comparing evaluation regions (101) of the recorded inspection images (23) with the image data of the evaluation region (101) of the reference image (23),
wherein a comparison of characteristic information of the sub-regions (0 to 15) of the evaluation region (101) of the reference image with corresponding sub-regions (0 to 15) of the inspection image is carried out and
wherein for the sub-regions it is determined on the basis of the content of the image whether a comparison takes place through correlation processes or a comparison of the average grayscale values.

13. Device according to claim 12,
**characterised in that**
a light barrier (27) is provided which detects the beginning and / or the end (36a to 36d) of the print product (16) on the transport means (18) in the transport direction (A).

14. Device according to one of the claims 12 or 13,
**characterised in that**
the device comprises a pressing device (37) for pressing the print product (16) onto the transport means (18) at least in the region of the inspection image to be detected in the recording region of the digital camera (21).

15. Computer program with program code means in order to carry out the method steps of a method according to one of the claims 1 to 11 if the computer program is executed on a computing means in effective connection with a digital camera (21).

16. Computer program product with program code means which are stored on a computer-readable data carrier in order to perform the method steps of a method according to one of the claims 1 to 11 if the computer program is executed on a computing means in effective connection with a digital camera (21).

## Revendications

1. Procédé pour vérifier des produits d'impression (16) de même type, en particulier des feuilles de papier imprimées (17) de même type, qui sont transportés par un dispositif de transport (18), dans lequel
- dans une phase d'apprentissage, des images tests (22) sont enregistrées en plusieurs endroits du produit imprimé (16) avec un appareil photo numérique (21),
- à l'intérieur de chaque image test (22) est définie une zone d'analyse (101) qui est plus petite ou de même taille que l'image test (22),
- chaque zone d'analyse (101) est analysée en termes de ses informations caractéristiques,
- comme image de référence (23), on choisit l'image test (22) dans laquelle se trouve la zone d'analyse (101) avec les informations caractéristiques les plus distinctives,
- les produits d'impression (16) de même type suivants sont vérifiés par enregistrement d'au moins une image de vérification en une position correspondant à l'image de référence (23) et par comparaison d'au moins une sous-partie de l'image de vérification avec la zone d'analyse de l'image de référence (23) à l'aide de données d'image,
- pour déterminer une image de référence (23), la zone d'analyse (101) est divisée en une pluralité de sous-parties (0 à 15) qui sont analysées en termes de leurs informations caractéristiques, et
- pour vérifier des produits d'impression suivants (16), on effectue une comparaison entre des informations caractéristiques des sous-parties (0 à 15) de la zone d'analyse (101) de l'image de référence et des sous-parties correspondantes (0 à 15) de l'image de vérification,
dans lequel on détermine pour les sous-parties, sur la base de leur contenu en images, si une comparaison par un procédé de corrélation ou une comparaison des valeurs moyennes de niveaux de gris est effectuée.

2. Procédé selon la revendication 1,
***caractérisé en ce que***
les sous-parties (0 à 15) sont analysées en termes de leurs informations caractéristiques en déterminant le nombre de bords et/ou la valeur de contraste de chaque sous-partie (0 à 15).

3. Procédé selon la revendication 2,
***caractérisé en ce qu'***
en cas de dépassement vers le bas d'une valeur de seuil en termes de nombre de bords dans l'une des sous-parties (0 à 15), une valeur moyenne des niveaux de gris de la sous-partie (0 à 15) est déterminée et enregistrée.

4. Procédé selon la revendication 2 ou 3,
***caractérisé en ce que***
la comparaison est effectuée par un procédé de corrélation ou par comparaison des valeurs moyennes de niveaux de gris en fonction du dépassement vers le bas d'une valeur de seuil en termes de nombre de bords.

5. Procédé selon l'une quelconque des revendications précédentes,
***caractérisé en ce que**,*
comme image de référence avec la zone d'analyse (101) qui présente les informations caractéristiques les plus distinctives, on choisit l'image test (22) sur laquelle le plus grand nombre de sous-parties (0 à 15) présente un nombre de bords qui est supérieur à une valeur de seuil.

6. Procédé selon l'une quelconque des revendications 1 à 5,
***caractérisé***
***en ce que****,* dans la zone d'analyse (101), est déterminé un motif de référence (25), et
***en ce que**,* pour déterminer le motif de référence (25), une pluralité de motifs de test qui peuvent se superposer est définie et analysée dans la zone d'analyse (101).

7. Procédé selon la revendication 6,
***caractérisé en ce que**,*
par rapport aux autres motifs de test évalués, on distingue le motif de référence (25) par un nombre optimal de bords pour une valeur optimale du contraste et par une netteté.

8. Procédé selon l'une quelconque des revendications précédentes,
***caractérisé***
***en ce que*** les images tests (22) sont produites avec différents temps d'exposition ou temps d'obturation (s), et
***en ce que**,* pour optimiser le temps d'exposition, au moins une grandeur caractéristique est relevée et analysée pour chaque image produite, en particulier un histogramme.

9. Procédé selon l'une quelconque des revendications précédentes,
***caractérisé en ce qu'***
en présence d'un code-barres (24) sur le produit d'impression (16), le motif de référence (25) présentant le code-barres (24) est sélectionné.

10. Procédé selon l'une quelconque des revendications précédentes,
***caractérisé en ce que***
le nombre et la position des images tests (22) possibles sur le produit d'impression (16) sont déterminés dans la direction de transport (A) de telle manière qu'il se produise un agencement essentiellement symétrique par rapport au centre du produit d'impression.

11. Procédé selon l'une quelconque des revendications 1 à 10,
***caractérisé***
***en ce que****,* pour aligner la zone d'analyse (10) sur une image de vérification, le motif de référence (25) déterminé est identifié sur l'image de vérification, et
**en ce *que*** les sous-parties (0 à 15) à étudier de l'image de vérification sont définies en fonction de la position du motif de référence (101).

12. Dispositif (40) pour vérifier des produits d'impression (16) de même type, en particulier des feuilles de papier imprimées (17) de même type, avec
- un appareil photo numérique (21) pour enregistrer des images tests (22) du produit d'impression (16),
- un dispositif d'éclairage (29) pour éclairer le produit d'impression (16),
- une entrée pour introduire un signal de position,
- un dispositif de commande et d'analyse (28) pour commander l'appareil photo numérique (21) et le dispositif d'éclairage (29) et pour analyser des données d'images de l'appareil photo numérique (21),
dans lequel le dispositif de commande et d'analyse (28) est agencé, avec le dispositif d'éclairage (29) et l'appareil photo numérique (21), pour effectuer une phase d'apprentissage pendant laquelle des images tests (22) sont enregistrées avec l'appareil photo numérique (21) en plusieurs endroits du produit d'impression (16),
- pour analyser des zones d'analyse (101) des images tests (22) enregistrées en termes de leurs informations caractéristiques,
- pour sélectionner une image test (22) avec la zone d'analyse (101), avec les informations caractéristiques les plus distinctives en tant qu'image de référence (23) et
- pour vérifier les produits d'impression de même type suivants (16) par enregistrement d'images de vérification en des positions appartenant à l'image de référence (23) et par comparaison entre des zones d'analyse (101) des images de vérification (23) enregistrées et des données d'image de la zone d'analyse (101) de l'image de référence (23),
dans lequel on effectue une comparaison entre des informations caractéristiques des sous-parties (0 à 15) de la zone d'analyse (101) de l'image de référence et des sous-parties correspondantes (0 à 15) de l'image de vérification, et dans lequel on détermine pour les sous-parties, sur la base de leur contenu en images, si une comparaison par un procédé de corrélation ou une comparaison des valeurs moyennes de niveaux de gris est effectuée.

13. Dispositif selon la revendication 12,
***caractérisé en ce qu'***
une cellule photoélectrique (27) est prévue, qui relève le début et/ou la fin (36a à 36d) du produit d'impression (16) sur le dispositif de transport (18) dans la direction de transport (A).

14. Dispositif selon la revendication 12 ou 13,
***caractérisé en ce que***
le dispositif comprend un dispositif de pression (37) pour presser le produit d'impression (16) sur le dispositif de transport (18) au moins au niveau de l'image de vérification à relever dans la zone d'enregistrement de l'appareil photo numérique (21).

15. Programme informatique avec des moyens de code de programme, pour effectuer les étapes d'un procédé selon l'une quelconque des revendications 1 à 11, lorsque le programme informatique est exécuté sur un dispositif de calcul relié activement à un appareil photo numérique (21).

16. Produit-programme informatique avec des moyens de code de programme qui sont enregistrés sur un support de données lisible par ordinateur, pour effectuer les étapes d'un procédé selon l'une quelconque des revendications 1 à 11, lorsque le programme informatique est exécuté sur un dispositif de calcul relié activement à un appareil photo numérique (21).
